(19) Europäisches Patentamt
European Patent Office
Office européen des brevets

(11) **EP 3 418 126 A1**

(12) **EUROPÄISCHE PATENTANMELDUNG**

(43) Veröffentlichungstag:
26.12.2018 Patentblatt 2018/52

(51) Int Cl.:
**B60R 16/023** (2006.01)

(21) Anmeldenummer: **18167917.6**

(22) Anmeldetag: **18.04.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.06.2017 DE 102017210366**

(71) Anmelder: **Robert Bosch GmbH**
**70442 Stuttgart (DE)**

(72) Erfinder:
• **Muenzing, Patrick**
**70734 Fellbach (DE)**
• **Koller, Oliver Dieter**
**71384 Weinstadt (DE)**

(54) **VERFAHREN ZUM BETREIBEN EINES BORDNETZES**

(57) Die Erfindung betrifft ein Verfahren zum Betreiben eines Bordnetzes (10, 50), das eine Anzahl an Verbrauchern (64, 72, 80, 82, 84, 86, 88, 90, 94, 102, 104, 106) umfasst, in einem Fahrzeug, wobei für mindestens einen der Verbraucher über einen Zeitraum mindestens eine physikalische Größe erfasst wird und ein auf diese Weise ermittelter zeitlicher Verlauf (99) analysiert wird und aufgrund dessen ein Ausfallverhalten des mindestens einen Verbrauchers (64, 72, 80, 82, 84, 86, 88, 90, 94, 102, 104, 106) vorhergesagt wird.

**Fig. 2**

EP 3 418 126 A1

**Beschreibung**

Die Erfindung betrifft ein Verfahren zum Betreiben eines Bordnetzes und eine Anordnung zum Durchführen des Verfahrens.

Stand der Technik

Als Bordnetz wird die Gesamtheit aller elektrischen Komponenten in einem Fahrzeug bezeichnet. Das Bordnetz, das auch Fahrzeugbordnetz genannt wird, hat die Aufgabe, die elektrischen Verbraucher im Fahrzeug mit Energie zu versorgen. Fällt die Energieversorgung aufgrund eines Fehlers bzw. von Alterung im Bordnetz bzw. in einer Bordnetzkomponente in heutigen Fahrzeugen aus, so entfallen wichtige Funktionen. Hiervon kann bspw. die Servolenkung betroffen sein. Da die Lenkfähigkeit des Fahrzeugs nicht beeinträchtigt, sondern nur schwergängig wird und der Fahrer als Rückfallebene zur Verfügung steht, wird der Ausfall des Bordnetzes in heutigen in Serie befindlichen Fahrzeugen akzeptiert.

Es ist jedoch zu beachten, dass aufgrund der zunehmenden Elektrifizierung von Aggregaten sowie der Einführung von neuen Fahrzeugfunktionen höhere Anforderungen an die Sicherheit und Zuverlässigkeit der elektrischen Energieversorgung im Kraftfahrzeug gegeben sind.

Bei zukünftigen hochautomatisierten Fahrfunktionen, wie z. B. einem Autobahn-Piloten, werden dem Fahrer fahrfremde Tätigkeiten in begrenztem Maße erlaubt. Hieraus resultiert, dass bis zum Beenden der hochautomatisierten Fahrfunktion der menschliche Fahrer die Funktion als sensorische, regelungstechnische, mechanische und energetische Rückfallebene nur noch eingeschränkt wahrnehmen kann. Daher besitzt die elektrische Versorgung beim hochautomatisierten Fahren zur Gewährleistung der sensorischen, regelungstechnischen und aktuatorischen Rückfallebene eine bisher im Kraftfahrzeug nicht gekannte Sicherheitsrelevanz. Eine Alterung und ggf. daraus resultierende Fehler im elektrischen Bordnetz müssen im Dienste der Produktsicherheit daher zuverlässig und möglichst vollständig erkannt werden.

Beim zukünftigen automatisierten und autonomen Fahrbetrieb im Kraftfahrzeug steht der Fahrer nicht mehr, wie dies bekannt ist, als sensorische, regelungstechnische, mechanische und energetische Rückfallebene zur Verfügung. Das Fahrzeug übernimmt die Funktionen des Fahrers, wie z. B. die Umgebungserkennung, die Trajektorien-Planung und die Trajektorien-Umsetzung, die bspw. auch das Lenken und Bremsen umfassen.

Fällt die Energieversorgung der sicherheitsrelevanten Komponenten aus, ist das Fahrzeug durch die hoch- oder vollautomatisierte Funktion nicht mehr kontrollierbar, da alle vorstehend beschriebenen Funktionen, wie bspw. Umgebungserkennung, Trajektorienplanung und -umsetzung, nicht mehr zur Verfügung stehen.

Dadurch ergeben sich aus Sicht der Produktsicherheit sehr hohe Anforderungen an das Fahrzeugbordnetz. Dies bedeutet ebenso, dass die Funktion des automatisierten bzw. autonomen Fahrens dem Nutzer nur dann zur Verfügung stehen darf, wenn das Bordnetz in einwandfreiem Zustand ist und in naher Zukunft auch bleibt.

Die Druckschrift DE 10 2014 007 548 A1 beschreibt ein Verfahren zum Betreiben eines Bordnetzes mit einer Anzahl an Verbrauchern, bei dem für zumindest einen Teil der Verbraucher ein Spannungsschwellwert überwacht wird, wobei diese Überwachung durch die Verbraucher selbst vorgenommen wird.

Offenbarung der Erfindung

Vor diesem Hintergrund werden ein Verfahren nach Anspruch 1 und Bordnetz gemäß Anspruch 11 vorgestellt. Ausführungsformen ergeben sich aus den abhängigen Ansprüchen und aus der Beschreibung.

Es werden ein Verfahren zum Betreiben eines Bordnetzes und ein solches Bordnetz vorgestellt, über das mehrere elektrische Verbraucher, wie bspw. eine Lenkung, mit elektrischer Energie versorgt werden. Dabei kann die Funktionstüchtigkeit dieser Verbraucher gewährleistet werden. Dies wird dadurch erreicht, dass für mindestens einen der elektrischen Verbraucher, in einer Ausführung für alle zumindest sicherheitsrelevanten Verbraucher, ein Ausfallverhalten vorhergesagt und/oder eine Ausfallwahrscheinlichkeit ermittelt wird. Hierzu können bspw. eine Verlustleistung und ein Temperaturverlauf des mindestens einen Verbrauchers berücksichtigt werden. Daraus wird dessen Ausfallwahrscheinlichkeit sowie ggf. dessen sich daraus ergebende Restlebensdauer abgeleitet. Sicherheitsrelevante Verbraucher sind Verbraucher, die eine sicherheitsrelevante Funktion, wie bspw. Bremse und Lenkung, erfüllen. Nicht sicherheitsrelevante Verbraucher sind bspw. Komfortverbraucher, wie z. B. Radio und Klimaanlage.

Es ist ggf. auch eine Berücksichtigung eines Risswachstums denkbar. Dies wäre eine Analyseebene tiefer. Temperaturwechsel führen zur Ausbreitung von Mikrorissen, die nach gegebener Zeit zum Ausfall bzw. zur Degradierung führen können.

In dem vorgestellten Bordnetz werden in Ausgestaltung Verbraucher über intelligente Schalt- bzw. Trennelemente, z. B. über eine elektronische Energieversorgungseinheit (ePDU: electronic Power Distribution Unit), an die Bordnetzkanäle des typischerweise redundanten Bordnetzes angeschlossen, um die Verbraucher im Fehlerfall vom Bordnetz abkoppeln zu können. So ist eine Gefährdung der sicherheitsrelevanten Verbraucher ausgeschlossen. Um nicht in jedem Verbraucher die Zuverlässigkeitsanalyse, die zur Prädiktion des Ausfallverhaltens nötig ist, implementieren zu müssen, kann in dem vorgestellten Bordnetz die Analyse im intelligenten Schaltelement integriert werden.

Die Zuverlässigkeitsanalyse und Prädiktion des Ausfallverhaltens von Verbrauchern war in bisherigen Serien-Bordnetzen nicht erforderlich. Bei einem Ausfall sicherheitsrelevanter Fahrfunktionen, was sowohl durch die sicherheitsrelevanten Komponenten selbst als auch durch Fehler der nicht sicherheitsrelevanten Komponenten, z. B. durch Kurzschlüsse, entstehen kann, stand der Fahrer als Rückfallebene zur Verfügung, weswegen die Auswirkungen des Ausfalls kaum ins Gewicht fielen. Die ausgefallenen Komponenten wurden beim Werkstattbesuch lediglich ersetzt.

Es wurde nunmehr erkannt, dass im Gegensatz dazu in zukünftigen automatisierten Fahrzeugen der Fahrer als Rückfallebene entfällt. Daher ist das Wissen über das Ausfallverhalten der Verbraucher für den sicheren Betrieb der Fahrzeuge unerlässlich. Weiterhin ist zu berücksichtigen, dass auch Fehler in nicht sicherheitsrelevanten Verbrauchern aufgrund von Wechselwirkungen zu sicherheitskritischen Systemzuständen führen können. Es befinden sich nämlich sowohl sicherheitsrelevante als auch nicht sicherheitsrelevante Verbraucher in dem Bordnetz.

Die Zuverlässigkeitsanalysen, die zur Vorhersage des Ausfallverhaltens der in Ausgestaltung an das intelligente Schaltelement, wie bspw. die ePDU, angeschlossenen Verbraucher nötig sind, werden in dem Schaltelement umgesetzt. Dazu sollte der jeweilige Verbraucher eine gewisse Kennung haben, so dass das intelligente Schaltelement, z. B. die ePDU, die zur Prädiktion des Ausfallverhaltens nötigen Modelle, z. B. ein Belastbarkeitsmodell und/oder eine Wöhlerkurve, heranziehen kann, um die Vorhersage bzw. Prädiktion durchzuführen. Die Prädiktion umfasst die Aufnahme physikalischer Größen bzw. Kenngrößen, wie bspw. elektrischer Strom, elektrische Spannung, elektrischer Widerstand, Umgebungstemperatur, Temperaturen der bzw. in der Komponente, die zur Analyse der Zuverlässigkeit des Verbrauchers herangezogen werden. Anhand der physikalischen Größen und insbesondere anhand des zeitlichen Verlaufs dieser Größen wird die Belastung des jeweiligen Verbrauchers ermittelt. Durch den Vergleich mit dem Belastbarkeitsmodell kann die momentane Ausfallwahrscheinlichkeit ermittelt werden. Durch Vorhersage des zukünftigen Belastungsverlaufs lässt sich das Ausfallverhalten des Verbrauchers vorhersagen.

Somit kann der untersuchte Verbraucher dem intelligenten Schaltelement wie auch weitere Verbraucher zugeordnet sein. In dem Bordnetz können ein intelligentes Schaltelement, dem einige oder alle Verbraucher zugeordnet sind, aber auch mehrere intelligente Schaltelemente vorgesehen sein. Dieses Schaltelement bzw. diese Schaltelemente ist bzw. sind dann dazu eingerichtet, die erforderliche Analyse bzw. die erforderlichen Analysen durchzuführen.

Die Wöhlerkurve ist ein Diagramm, in dem statistisch für vorgegeben Belastungen die ertragbarer Belastungshäufigkeit aufgetragen ist. Die Werte hierfür können empirisch ermittelt werden. Verwendung findet die Wählerkurve in der Analyse bei der Umrechnung der Einzelbelastung in die Gesamtbelastung auf Referenzniveau. Auf diesem Niveau liegt das Belastbarkeitsmodell vor.

Das Belastbarkeitsmodell bildet das Ausfallverhalten von Komponenten auf dem beschriebenen Referenzniveau ab. Dabei wird die Ausfallwahrscheinlichkeit über der Belastungshäufigkeit bei Referenzbedingungen abgebildet. Je nach Ausfallverhalten werden unterschiedliche Verteilungen, wie z. B. die Weibullverteilung (oder z. B.: Normalverteilung, Exponentialverteilung, Logarithmische Normalverteilung, Gammaverteilung, Erlangverteilung, Hjorthverteilung, Sinusverteilung, ...) eingesetzt. Die Werte hierfür können empirisch ermittelt werden.

Die Prädiktion verschiedener Verbraucher und der anderen BordnetzKomponenten kann in einem nächsten Schritt auf Systemebene, z. B. in einem Steuergerät, in einer Cloud oder einer ähnlichen Einrichtung, zusammengeführt werden.

Das vorgestellte Verfahren hat, zumindest in einigen der Ausführungen, eine Reihe von Vorteilen. So ist es nicht unbedingt erforderlich, die Zuverlässigkeitsanalyse bzw. Prädiktion in jedem Verbraucher umzusetzen. Das Verfahren unterstützt die Freigabe und Freigabeentscheidung für automatisierte Fahrfunktionen. So können Alterungseffekte in Bordnetzkomponenten mit hoher Wichtigkeit zum Entzug der Freigabe bzw. zum Verlassen der Fahrfunktionen, wie z. B. des automatisierten Fahrens, bzw. zum Entzug der Freigabe oder zum Verlassen bestimmter Betriebsmodi, wie bspw. Segeln, führen, um sicherheitskritische Zustände zu vermeiden. Weiterhin kann durch adaptierte Fahrstrategien die Zuverlässigkeit gesteigert werden. Fahrsituationen, die im Betrieb zu einem starken Alterungsverhalten der Bordnetzkomponente führen, können, falls dies aus Systemsicht erforderlich ist, vermieden werden. Es kann somit das Ergebnis der durchgeführten Analyse beim Betrieb des Fahrzeugs berücksichtigt werden. Darüber hinaus wird die Verfügbarkeit der neuen Fahrfunktionen erhöht. Präventive Wartungsmaßnahmen können rechtzeitig vor einem unkontrollierten Ausfall des Bordnetzsystems, z. B. in regulären Wartungsintervallen, durchgeführt werden. Bei der Übergabe vom automatisierten Fahrbetrieb in den manuellen Fahrbetrieb kann die Sicherheit erhöht werden. Durch frühzeitiges Warnen des Systems vor einem drohenden kritischen Komponenten-/Bordnetz-/Fahrzeug-Zustand kann die Fahrzeugübergabe in einer für den Fahrer leichter beherrschbaren Situation durchgeführt werden.

Weiterhin berücksichtigt das Verfahren die zwingende Notwendigkeit, das Fahrzeug auch bei Ausfall von Komponenten ohne Eingriff eines Fahrers bei vollautomatisiertem Fahren in den sicheren Zustand zu bringen. So ist ein Zeitgewinn bei der Einleitung der Rückfallstrategie durch frühzeitige Warnung bzw. keine Freigabe der Fahrfunktionen bei sich anbahnendem kritischen Komponenten-/Bordnetzzustandes aufgrund von Verschleiß in Bordnetzkomponenten mit hoher Importanz im Gesamtsystem zu verzeichnen. Darüber hinaus wird die Zuverlässigkeit und die Sicherheit von nicht-automatisierten Fahrzeugen durch frühzeitiges Erkennen von anstehenden Ausfällen erhöht, wodurch auch "Liegenbleiber" auf Fahrspuren, z. B. auf Autobahnen, vermieden werden können.

Weitere Vorteile und Ausgestaltungen der Erfindung ergeben sich aus der Beschreibung und den beigefügten Zeichnungen.

Es versteht sich, dass die voranstehend genannten und die nachstehend noch zu erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen

Figur 1 zeigt in einem Blockschaltbild ein Bordnetz für automatisierte Fahrfunktionen.

Figur 2 zeigt in einem Blockschaltbild eine Ausführung eines Bordnetzes für automatisierte Fahrfunktionen, das zur Ausführung des beschriebenen Verfahrens eingerichtet ist.

Figur 3 zeigt eine Umsetzung einer Verbraucher-Zuverlässigkeitsüberwachung durch eine ePDU.

Figur 4 zeigt eine beispielhafte Umsetzung der Belastungsermittlung.

Figur 5 zeigt ein Zuverlässigkeitsblockdiagramm zur Ermittlung der Systemzuverlässigkeit.

Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

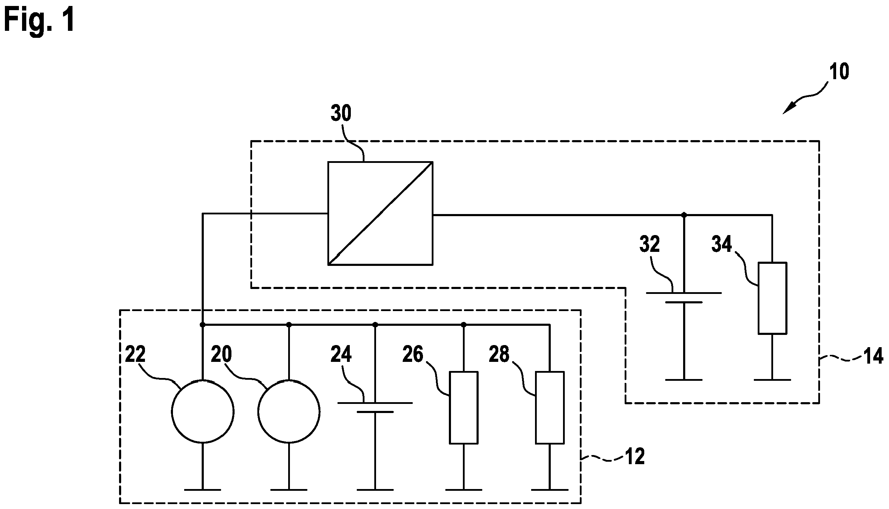

Figur 1 zeigt ein Bordnetz, das zur Realisierung von hoch-/vollautomatisierten Fahrfunktionen eingesetzt werden kann und das insgesamt mit der Bezugsziffer 10 bezeichnet ist. Das Bordnetz 10 umfasst einen Basiskanal 12 bzw. einen ersten Kanal, der einem heutigen Start-Stopp-Bordnetz entspricht, und einen zweiten Kanal 14.

In dem Basisbordnetz 12 sind ein Generator 20, ein Starter 22, eine Bleibatterie B1 24, nicht sicherheitsrelevante Verbraucher 26, z. B. Komfortverbraucher R2, und sicherheitsrelevante Verbraucher R1a 28, z. B. Lenkung, Bremsen usw. In dem zweiten Kanal 14 sind ein Gleichspannungswandler 30, eine Bleibatterie B2 32 und sicherheitsrelevante Verbraucher R1b 34 vorgesehen, die redundant zu den Verbrauchern R1a 28 sind.

Es werden somit aufgrund der hohen Bedeutung sicherheitsrelevanter Funktionen, wie bspw. Lenkung und Bremse, Komponenten, die diese Funktionen erfüllen, redundant als Verbraucher R1a 28 und R1b 34 ausgeführt. Der zweite Kanal 14 wird über den Gleichspannungswandler 30 an den Basiskanal 12 angehängt. Die Batterien B1 24 und B2 32 werden von einem Batteriesensor (EBS) (nicht dargestellt) überwacht. Ein Energiemanagement überwacht das Bordnetz 10 und kann Verbraucher degradieren bzw. abschalten und Messungen triggern. Nicht dargestellt ist ein Kanal R, der sowohl aus dem ersten Kanal 12 als auch aus dem zweiten Kanal 14 versorgt werden kann. In diesem können sicherheitsrelevante Verbraucher vorgesehen sein, die nicht redundant ausgeführt werden.

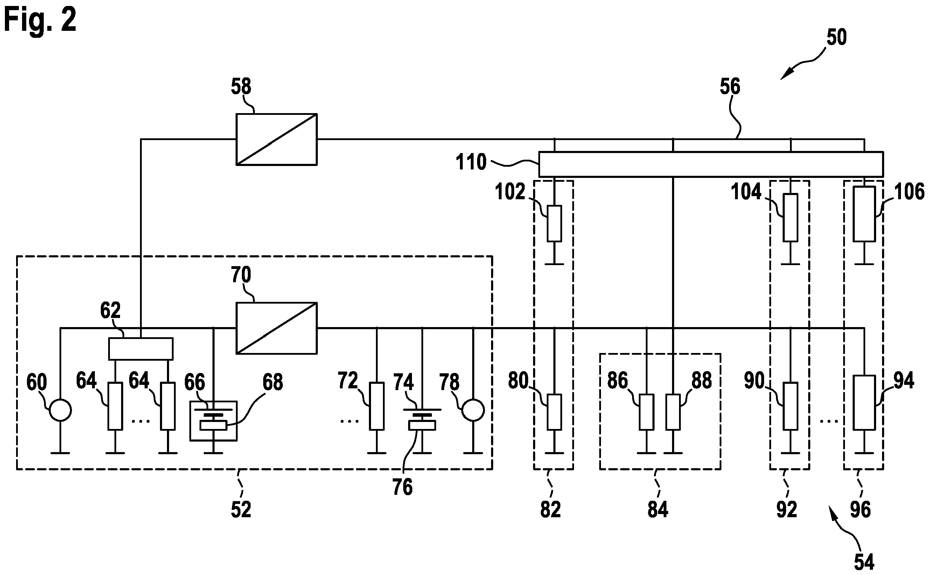

In Figur 2 ist ein Bordnetz 50 dargestellt, das für ein automatisiertes Fahren ausgelegt ist. Das Bordnetz umfasst ein Basisbordnetz 52, einen ersten sicherheitsrelevanten Kanal 54, und einen zweiten sicherheitsrelevanten Kanal 56, der über einen ersten Gleichspannungswandler 58 an das Basisbordnetz 52 gekoppelt ist.

In dem Basisbordnetz 52 sind eine elektrische Maschine 60, eine erste ePDU 62, nicht sicherheitsrelevante Verbraucher 64, eine erste Batterie 66 mit einem ersten Batteriesensor 68, ein zweiter Gleichspannungswandler 70, weitere nicht sicherheitsrelevante Verbraucher 72, eine zweite Batterie 74 mit einem zweiten Batteriesensor 76 und ein Starter 78 vorgesehen.

In dem ersten sicherheitsrelevanten Kanal 54 sind als Verbraucher ein iBooster 80 ein Bremssystems 82, ein Lenksystem 84 mit einem Verbraucher EPS1 86, ein Verbraucher HM1 90 einer Nutzerschnittstelle 92 und ein Verbraucher Sensorset1 94 einer Sensor- und Fahrzeugsteuerung 96 vorgesehen.

In dem zweiten Kanal 56 ist eine zweite ePDU 100 vorgesehen, über die ein Verbraucher ESP 102 des Bremssystems 82, ein Verbraucher HM2 104 der Nutzerschnittstelle 92, ein Verbraucher EPS2 88 des Lenksystems 84 und ein Verbraucher Sensorset2 106 der Sensor- und Fahrzeugsteuerung 96 an den zweiten Kanal 56 gekoppelt sind.

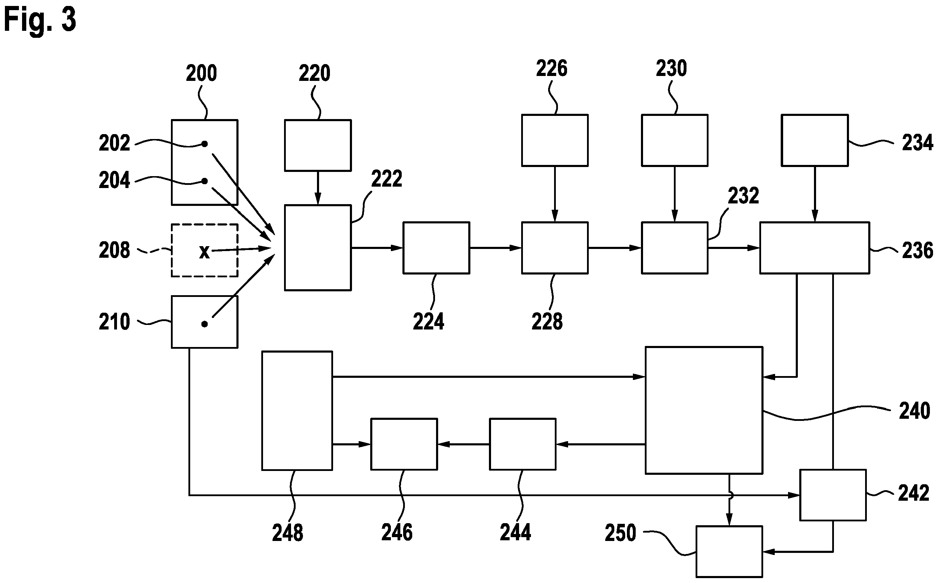

Im zweiten Kanal 56 wird somit zwischen dem eigentlichen Bordnetz 50 und den sicherheitsrelevanten Komponenten die zweite ePDU 100 als intelligentes Schaltelement bzw. als Verteilungseinheit zwischengeschaltet. Dabei wird jeder Verbraucher an einem separaten Kanal angebracht. Am Beispiel des Lenksystems 84 in dem zweiten Kanal 56, nämlich der Verbraucher EPS2 88, wird die Vorgehensweise zur Zuverlässigkeitsanalyse und -prädiktion anhand Figur 3 erläutert. Die Analyse erfolgt dabei online im Fahrzeugbetrieb.

Figur 3 zeigt eine mögliche Umsetzung der Verbraucher-Zuverlässigkeitsüberwachung durch die ePDU. Als Eingangsgrößen liegen Messgrößen 200 der ePDU vor, nämlich Spannung U 202 und Strom I 204, externe Messgrößen (optional) 208 und eine Betriebsdauer $t_i$ 210. Zusammen mit einem Verlustleistungsmodell 220 ergibt sich eine aktuelle Verlustleistung $P_v(t_i)$ 222. Diese wird als $P_v(t)$ in einen Speicher 224 eingegeben. Zusammen mit einem thermischen Modell 226 ergibt sich ein Temperaturverlauf T(t) 228. Zusammen mit einer Zählung 230 ergeben sich Temperaturhübe 232. Die Zählung kann z. B. mittels Rainflow-Zählung durchgeführt werden. Dabei wird eine Beanspruchungs-Zeit-Folge in eine Folge klassierter Umkehrpunkte umgewandelt und anschließend eine Zählung von Hysteresen zur Quantifizierung der Schädigung je Niveau durchgeführt. Zusammen mit einem Umrechnungsmodell 234 ergibt sich eine Schädigung 236, die zum einen mit 1 bezeichnet, in ein Belastbarkeitsmodell 240 und mit 2 bezeichnet, in eine Schädigung pro Zeit 242 eingegeben wird.

Aus dem Belastbarkeitsmodell 240 ergibt sich zum anderen, dem Pfad 1 folgend, eine aktuelle Ausfallwahrscheinlichkeit 244. Es wird dann ein Vergleich 246 mit einer definierten, zulässige Ausfallwahrscheinlichkeit 248 durchgeführt. Werden dabei bestimmte Grenzwerte erreicht bzw. überschritten, werden Maßnahmen, wie z. B. die Übergabe des Fahrzeugs an den Fahrer, eingeleitet.

Nach Pfad 2 ergibt sich aus der zulässigen Ausfallwahrscheinlichkeit 248 mittels Belastbarkeitsmodell 240 und der Schädigung pro Zeit 242 eine Restlebensdauer 250. Anhand dieser Kenngröße kann z. B. die Freigabe einer Funktion verhindert oder die Übergabe an den Fahrer möglichst frühzeitig getriggert werden.

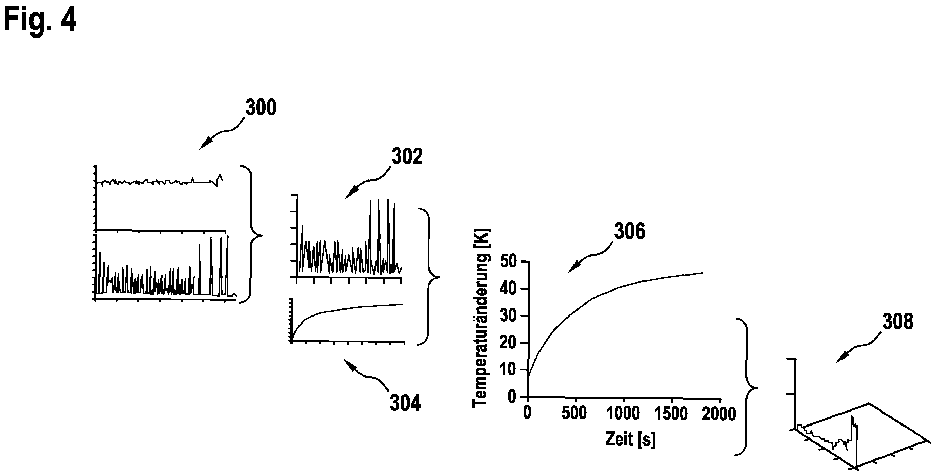

Figur 4 zeigt eine beispielhafte Umsetzung der Belastungsermittlung. Die Darstellung zeigt Strom- und Spannungsgrößen 300, einen Verlustleistungsverlauf 302, einem thermischen Ersatzschaltbild (zTH-Modell) 304, einen Temperaturverlauf 306 und Temperaturhübe 308. Aus den Strom- und Spannungsgrößen und einem Verlustleistungsmodell wird der Verlauf der Verlustleistung ermittelt. Die Kombination aus Verlustleistungsverlauf und zTH-Modell ergibt den insbesondere schädigenden Temperaturverlauf eines Bauteils bzw. einer Komponente. Mittels Rainflow-Zählung wird der Verlauf klassiert.

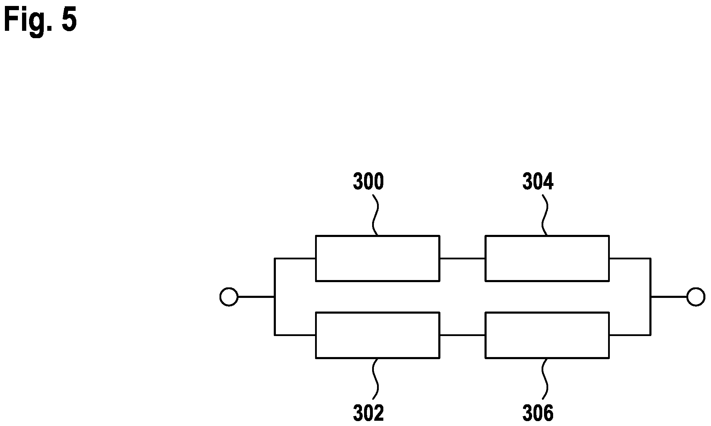

Figur 5 zeigt ein vereinfachtes Zuverlässigkeitsblockdiagramm zur Ermittlung der Systemzuverlässigkeit. Die Darstellung zeigt eine erste Energieversorgung 300, eine zweite Energieversorgung 302, ein erstes Lenksystem 304 und ein zweites Lenksystem 306. Bei dem Zuverlässigkeitsblockdiagramm handelt es sich um eine Methode, mit der Wirkzusammenhänge mittels boolesischer Algebra abgebildet werden. Für dieses Schaubild heißt es z. B.: Fällt Energieversorgung (EV)1 und 2 oder EV1 und Lenksystem (LS) 2 oder EV2 und LS1 aus, so kann die Funktion "Lenkung" nicht mehr realisiert werden. Auf Basis dieser Zusammenhänge lässt sich eine Zuverlässigkeitsaussage über die Funktion Lenkung generieren, und zwar Ist-Zustand und Prädiktion.

Zur Online-Ermittlung der Belastung der Lenkung werden somit Strom und Spannung (U, I in Figuren 3 und 4), entweder direkt von der ePDU gemessen oder an diese übermittelt, zusammen mit der Betriebsdauer $t_i$ und dem Verlustleistungsmodell übergeben. Je nach Komponente ist es möglich, dass weitere physikalische Kenngrößen (208 in Figur 3) im Verlustleistungsmodell berücksichtigt werden, die durch die ePDU oder externe Messeinrichtungen aufgenommen werden können. Durch die physikalischen Eingangsgrößen und das komponentenspezifische Verlustleistungsmodell wird die aktuelle Verlustleistung $P_v(t_i)$ der Lenkung ermittelt. Das Verlustleistungsmodell ermittelt aus den physikalischen Eingangsgrößen die Leistung, die nicht zur Funktionserfüllung eingesetzt wird und zur Erwärmung in den Bauteilen bzw. in der Komponente führt und dadurch Einfluss auf die Zuverlässigkeit bzw. Verschleiß bzw. Alterungseffekte der Komponente hat.

Die Werte der aktuellen Verlustleistung der Lenkung $P_v(t_i)$ werden an den Speicher 224 übergeben, wodurch der Verlauf der Verlustleistung P(t) entsteht. Durch Faltung des Verlustleistungsmodells der Lenkung mit dem thermischen Modell ($z_{Tn}$-Modell) der Lenkung erhält man den Temperaturverlauf T(t). Die Verlustleistungsmodelle und die thermischen Modelle können auf die gesamte Komponente bezogen sein. Es kann auch vorgesehen sein, dass nur die ausfallrelevanten Bauteile der Komponente analysiert werden, da diese für die Nicht-Funktionserfüllung ausschlaggebend sind - es muss auf jeden Fall konsistent auf dieselben Bauteile bezogen sein. Aus dem Temperaturverlauf T(t) werden die Extremwerte extrahiert und anschließend die Rainflow-Zählung zur Ermittlung der Temperaturhübe eingesetzt. Mittels Umrechnungsmodell, z. B. Norris-Landzberg, werden die Temperaturhübe auf Temperaturhübe auf Referenzniveau $T_{RN}$ umgerechnet. Diese Temperaturhübe auf Referenzniveau entsprechen der aktuellen Schädigung bzw. Belastung der Lenkung.

Im zweiten Teil der Online-Analyse wird die Belastung der Lenkung deren Belastbarkeit gegenübergestellt, um

1) Die aktuelle Ausfallwahrscheinlichkeit der Lenkung,

2) Die Restlebensdauer der Lenkung

zu ermitteln. Dabei liegt das Belastbarkeitsmodell auf dem Referenzniveau vor, auf das bei der Belastungsermittlung umgerechnet wurde. Das Belastbarkeitsmodell ist hier in Form einer Weibullverteilung dargestellt. Es kann auch möglich sein, dass das Belastbarkeitsmodell von Komponenten durch andere Verteilungen besser abgebildet werden kann. In der Weibull-Verteilung werden den Temperaturhüben auf Referenzniveau Ausfallwahrscheinlichkeiten zugeordnet. Es ist üblich, die Medianverteilung zu verwenden, d. h. 50 % der Lenksysteme sind beim Erreichen der Kurve bereits ausgefallen, 50 % noch in Ordnung. Es sind auch andere Verteilungen bzw. Vertrauensbereiche denkbar.

1) Ermittlung der aktuellen Ausfallwahrscheinlichkeit der Lenkung, siehe 1 in Figur 3)

Anhand des Belastbarkeitsmodells wird aus dem Wert der aktuellen Schädigung $T_{RNakt}$ die aktuelle Ausfallwahrscheinlichkeit $F_{akt}$ berechnet. Dieser Wert wird mit der vorgegebenen zulässigen Ausfallwahrscheinlichkeit $F_{zul}$ verglichen. Gilt: $F_{akt} \geq F_{zul}$, muss der automatisierte Fahrmodus wenn möglich sofort verlassen werden, d. h. eine Fahrerübergabe, bzw. der Übergang in den sicheren Zustand eingeleitet werden.

Wird die Prognose nicht nach 2 realisiert, sind auf Basis des Vorgehens nach 1 weitere Maßnahmen denkbar, welche die Verfügbarkeit und Sicherheit des Fahrzeugs aufrechterhalten:

- Um den Übergang in den sicheren Zustand zu vermeiden bzw. dem Fahrer Zeit für die Übernahme des Fahrzeugs zu ermöglichen, wird eine Schwelle definiert, ab der der Fahrer zur Übernahme aufgefordert wird, z. B. wenn gilt: $F_{akt} \geq 0{,}99 \cdot Fzul$.

- Um die Verfügbarkeit des Fahrzeugs aufrecht zu erhalten und das Eintreten einer sicherheitskritischen Situation zu vermeiden,

wird die automatisierte Fahrfunktion ab einem Schwellwert nicht mehr freigegeben, z. B. wenn gilt: Fakt ≥ 0,97 · $F_{zul}$ und

wird der Fahrer aufgefordert, eine Werkstatt aufzusuchen, z.B. wenn gilt:

$$F_{akt} \geq 0{,}95 \cdot F_{zul}.$$

2) Ermittlung der Restlebensdauer der Lenkung

Aus der bisherigen Schädigung $T_{RNakt}$ und der Betriebsdauer $t_i$ wird die Schädigung $T_{prot}$ ermittelt. Der lineare Ansatz dazu ist:

$$T_{prot} = \frac{T_{RNakt}}{t_i}$$

Gleichzeitig wird mittels zulässiger Ausfallwahrscheinlichkeit $F_{zul}$ und der Belastbarkeitsverteilung die zulässige Schädigung $T_{RNzul}$ ermittelt. Aus der Schädigung pro Zeit $T_{prot}$ und der zulässigen Schädigung $T_{RNzul}$ wird die Restlebensdauer bis zum Erreichen der zulässigen Ausfallwahrscheinlichkeit $t_{rest}$ ermittelt:

$$t_{rest} = \frac{T_{RNzul}}{T_{prot}} \left( = \frac{T_{RNzul}}{T_{RNakt}} \cdot t_i \right)$$

3) Übergabe der Ausfallwahrscheinlichkeiten der Lenkung an Systemanalyse

Wird auf Systemebene eine Prognose durchgeführt, so liegt auf Systemebene ein Systemzuverlässigkeitsmodell vor, wie z. B. ein Zuverlässigkeitsblockdiagramm in Bild 5. In diesem werden die zur Funktionserfüllung relevanten Zusammenhänge des Systems dargestellt. Um auf Systemebene prognostizieren zu können, muss dieses Modell mit prognostizierten Werten der Komponenten/Teilsysteme bedatet werden. Für die Lenkung bedeutet dies, dass für verschiedene zukünftige Zeitpunkte die Ausfallwahrscheinlichkeit nach dem linearen Ansatz aus 2 (Figur 3) ermittelt wird: $T_{RNzuk1...n} = T_{RNakt} + t_{zuk1...n} \cdot T_{prot}$. Dabei ist $T_{RNzuk1..n}$ ein Vektor über die zukünftige Belastung. $T_{RNakt}$ ist der aktuelle Schädigungswert, $t_{zuk1...n}$ stellt die Zeitpunkte dar, welche prognostiziert werden sollen und $T_{prot}$ ist der mittlere Schädigungszuwachs pro Zeiteinheit.

Mittels Belastbarkeitsmodell wird jedem Wert in $T_{RNzuk1...n}$ eine Ausfallwahrscheinlichkeit $F_{zuk1...n}$ zugewiesen (Vorgehen analog 1). Dieser Vektor wird an die Systembetrachtung weitergegeben. Aus den zukünftigen Werten aller Komponenten/Teilsysteme wird die Systemprognose erstellt.

Ziel ist es nur die Ermittlung der Werte, die für eine Systemzuverlässigkeitsanalyse nötig sind darzustellen, nicht die Systemzuverlässigkeitsanalyse an sich.

Folgende Realisierungen der Zuverlässigkeitsanalyse und -prognose wären außer der beschriebenen vollständigen Analyse in der ePDU auch denkbar:

Das beschriebene Vorgehen wird nur in Teilen in der ePDU umgesetzt. Die restlichen Schritte werden in einer bzw. mehreren anderen Verarbeitungseinheiten, z. B. Steuergeräte, Energiemanagement, Cloud durchgeführt. Sinnvoller Schnittpunkt wäre die Übergabe der Temperaturhübe, da die hier die großen Datenmengen in Temperaturhübe reduziert sind.

Signal zum Austausch von Komponente erfolgt ohne Ausfall von Komponenten/Leistungsdegradierung der Komponenten

Das Schaltelement gibt Signale zur Prognose des Verbraucherzustandes weiter, Ausfallwahrscheinlichkeiten der Verbraucher weiter

Das vorgestellte Verfahren ist grundsätzlich für den Einsatz in jedem Fahrzeug geeignet, bei dem das Bordnetz eine außerordentliche Sicherheitsrelevanz besitzt. Dies sind bspw. Fahrzeuge mit Segelbetrieb, Rekuperation oder auch automatisierte Fahrzeuge.

**Patentansprüche**

1. Verfahren zum Betreiben eines Bordnetzes (10, 50), das eine Anzahl an Verbrauchern umfasst, in einem Fahrzeug, wobei für mindestens einen der Verbraucher (26, 28, 34, 64, 72, 80, 82, 84, 86, 88, 90, 94, 102, 104, 106) über einen Zeitraum mindestens eine physikalische Größe erfasst wird und ein auf diese Weise ermittelter zeitlicher Verlauf analysiert wird und aufgrund dessen ein Ausfallverhalten des mindestens einen Verbrauchers (26, 28, 34, 64, 72, 80, 82, 84, 86, 88, 90, 94, 102, 104, 106) vorhergesagt wird.

2. Verfahren nach Anspruch 1, bei dem die Analyse in einem intelligenten Schaltelement durchgeführt wird, dem der mindestens eine Verbraucher (26, 28, 34, 64, 72, 80, 82, 84, 86, 88, 90, 94, 102, 104, 106) zugeordnet ist.

3. Verfahren nach Anspruch 1 oder 2, bei dem eine Verlustleistung des mindestens einen Verbrauchers (26, 28, 34, 64, 72, 80, 82, 84, 86, 88, 90, 94, 102, 104, 106) berücksichtigt wird.

4. Verfahren nach einem der Ansprüche 1 bis 3, bei dem ein Temperaturverlauf des mindestens einen Verbrauchers (26, 28, 34, 64, 72, 80, 82, 84, 86, 88, 90, 94, 102, 104, 106) berücksichtigt wird.

5. Verfahren nach einem der Ansprüche 1 bis 4, bei dem eine Restlebensdauer des mindestens einen Verbrauchers (26, 28, 34, 64, 72, 80, 82, 84, 86, 88, 90, 94, 102, 104, 106) abgeleitet wird.

6. Verfahren nach einem der Ansprüche 1 bis 5, bei dem jedem der Verbraucher (26, 28, 34, 64, 72, 80, 82, 84, 86, 88, 90, 94, 102, 104, 106) eine Kennung zugewiesen wird.

7. Verfahren nach einem der Ansprüche 1 bis 6, bei dem ein Belastbarkeitsmodell des mindestens einen Verbrauchers (26, 28, 34, 64, 72, 80, 82, 84, 86, 88, 90, 94, 102, 104, 106) berücksichtigt wird.

8. Verfahren nach einem der Ansprüche 1 bis 7, bei dem eine Wöhlerkurve des mindestens einen Verbrauchers (26, 28, 34, 64, 72, 80, 82, 84, 86, 88, 90, 94, 102, 104, 106) berücksichtigt wird.

9. Verfahren nach einem der Ansprüche 1 bis 8, bei dem mehrere Verbraucher (26, 28, 34, 64, 72, 80, 82, 84, 86, 88, 90, 94, 102, 104, 106) analysiert werden und Ergebnisse dieser Analysen zusammengeführt werden.

10. Verfahren nach einem der Ansprüche 1 bis 9, bei dem das Ergebnis der Analyse beim Betrieb des Fahrzeugs berücksichtigt wird.

11. Bordnetz mit einer Anzahl an Verbrauchern (26, 28, 34, 64, 72, 80, 82, 84, 86, 88, 90, 94, 102, 104, 106) in einem Fahrzeug, wobei das Bordnetz (10, 50) dazu eingerichtet ist, für mindestens einen der Verbraucher (26, 28, 34, 64, 72, 80, 82, 84, 86, 88, 90, 94, 102, 104, 106) über einen Zeitraum mindestens eine physikalische Größe zu erfassen und einen auf diese Weise ermittelten zeitlichen Verlauf zu analysieren und aufgrund dessen ein Ausfallverhalten des mindestens einen Verbrauchers (26, 28, 34, 64, 72, 80, 82, 84, 86, 88, 90, 94, 102, 104, 106) vorherzusagen.

12. Bordnetz nach Anspruch 11, bei dem ein intelligentes Schaltelement vorgesehen ist, in dem die Analyse durchgeführt wird und dem der mindestens eine Verbraucher (26, 28, 34, 64, 72, 80, 82, 84, 86, 88, 90, 94, 102, 104, 106) zugeordnet ist.

**Fig. 1**

EP 3 418 126 A1

# Fig. 2

EP 3 418 126 A1

Fig. 3

# Fig. 4

Fig. 5

Europäisches Patentamt
European Patent Office
Office européen des brevets

**EUROPÄISCHER RECHERCHENBERICHT**

Nummer der Anmeldung

EP 18 16 7917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 418 032 A (FORD GLOBAL TECH LLC [US]) 15. März 2006 (2006-03-15) * Seite 3, Zeile 31 - Seite 4, Zeile 6 * * Seite 5, Zeile 14 - Seite 6, Zeile 3 * * Seite 7, Zeile 34 - Seite 8, Zeile 34 * * Seite 9, Zeile 22 - Zeile 30 * * Seite 10, Zeile 4 - Zeile 29 * ----- | 1-12 | INV. B60R16/023 |
| X | EP 2 889 711 A2 (ROLLS ROYCE CORP [US]; ROLLS ROYCE NAM TECH INC [US]) 1. Juli 2015 (2015-07-01) * Absatz [0026] - Absatz [0028] * ----- | 1,5-12 | |
| X | DE 10 2012 222650 A1 (GM GLOBAL TECH OPERATIONS INC [US]) 20. Juni 2013 (2013-06-20) * Absatz [0025] - Absatz [0029] * ----- | 1,2,4-6, 10-12 | |
| X | DE 10 2012 215984 A1 (GM GLOBAL TECH OPERATIONS INC [US]) 21. März 2013 (2013-03-21) * Absatz [0021] - Absatz [0027] * ----- | 1-3,5,7, 9-12 | |
| X | WO 2014/173421 A1 (VOLVO TRUCK CORP [SE]) 30. Oktober 2014 (2014-10-30) * Seite 11, Zeile 3 - Seite 12, Zeile 24 * ----- | 1,4-7, 10-12 | RECHERCHIERTE SACHGEBIETE (IPC) B60R G01R G07C B60W |
| X | WO 02/18879 A1 (BATTELLE MEMORIAL INSTITUTE [US]; GREITZER FRANK L [US]; KANGAS LARS J) 7. März 2002 (2002-03-07) * Seite 14, Zeile 18 - Zeile 32 * * Seite 17, Zeile 1 - Zeile 3 * ----- | 1,4,5,7, 9-12 | |
| X | US 2003/009270 A1 (BREED DAVID S [US]) 9. Januar 2003 (2003-01-09) * Absatz [0326] - Absatz [0330] * * Absatz [0303] * ----- | 1 | |

Der vorliegende Recherchenbericht wurde für alle Patentansprüche erstellt

| Recherchenort | Abschlußdatum der Recherche | Prüfer |
|---|---|---|
| Berlin | 2. November 2018 | Standring, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 16 7917

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2018

| Im Recherchenbericht angeführtes Patentdokument | Datum der Veröffentlichung | Mitglied(er) der Patentfamilie | Datum der Veröffentlichung |
|---|---|---|---|
| GB 2418032 A | 15-03-2006 | DE 102005042062 A1<br>GB 2418032 A<br>JP 4750517 B2<br>JP 2006087293 A<br>US 2006058932 A1 | 16-03-2006<br>15-03-2006<br>17-08-2011<br>30-03-2006<br>16-03-2006 |
| EP 2889711 A2 | 01-07-2015 | EP 2889711 A2<br>US 2015185111 A1 | 01-07-2015<br>02-07-2015 |
| DE 102012222650 A1 | 20-06-2013 | CN 103163781 A<br>DE 102012222650 A1<br>US 2013158755 A1 | 19-06-2013<br>20-06-2013<br>20-06-2013 |
| DE 102012215984 A1 | 21-03-2013 | CN 103020420 A<br>DE 102012215984 A1<br>US 2013073222 A1 | 03-04-2013<br>21-03-2013<br>21-03-2013 |
| WO 2014173421 A1 | 30-10-2014 | BR 112015026777 A2<br>CN 105122029 A<br>EP 2989436 A1<br>JP 2016520819 A<br>US 2016078690 A1<br>WO 2014173421 A1 | 25-07-2017<br>02-12-2015<br>02-03-2016<br>14-07-2016<br>17-03-2016<br>30-10-2014 |
| WO 0218879 A1 | 07-03-2002 | US 7457785 B1<br>WO 0218879 A1 | 25-11-2008<br>07-03-2002 |
| US 2003009270 A1 | 09-01-2003 | US 2003009270 A1<br>US 2004039509 A1<br>US 2004130442 A1 | 09-01-2003<br>26-02-2004<br>08-07-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014007548 A1